(19) Europäisches Patentamt

European Patent Office

Office européen des brevets

(11) Publication number: **0 117 636**
**A2**

# EUROPEAN PATENT APPLICATION

(12)

(21) Application number: 84300501.8

(22) Date of filing: 26.01.84

(51) Int. Cl.³: **H 02 G 7/05**

(30) Priority: 27.01.83 GB 8302244

(43) Date of publication of application: 05.09.84
Bulletin 84/36

(84) Designated Contracting States: **AT BE CH DE FR IT LI LU NL SE**

(71) Applicant: BICC Public Limited Company, 21, Bloomsbury Street, London, WC1B 3QN (GB)

(72) Inventor: **Dey, Philip, 2 Pontwillim, Brecon Powys, South Wales (GB)**
Inventor: **Adam, John Francis, 48 Elkington Road, Yelvertoft Northampton (GB)**

(74) Representative: **Ross Gower, Edward Lewis et al, BICC plc Patents Department 38 Ariel Way Wood Lane, London W12 7DX (GB)**

(54) Overhead electrical transmission and distribution systems.

(57) A overhead conductor terminating clamp for securing a conductor to a tower comprises, in combination, the surfaces of opposed side walls of smoothly curved, channel-shaped conductor guide (3) which taper smoothly and continuously in a direction away from an end of the guide, and a wedge member (5) which has a complementary tapered surface. When a conductor (C) is positioned in the guide (3) and a tensile force is applied to that part of the conductor extending from the other end of the guide, the wedge member (5) is urged lengthwise to maintain it in engagement with the tapered surfaces with the conductor clamped between the wedge member and the base wall of the guide. Risk of damage to the core of the conductor and to any optical fibre loosely housed in the core is substantially reduced.

8302244

0117636

OVERHEAD ELECTRICAL TRANSMISSION

AND DISTRIBUTION SYSTEMS

This invention relates to overhead electric transmission and distribution systems of the kind in which at least one overhead flexible electric conductor is suspended at spaced positions along its length from towers, pylons, poles or other upstanding supports, all such upstanding supports hereinafter, for convenience, being included in the generic term "tower".

Where a length of overhead flexible electric conductor directly or indirectly suspended from a tower of an overhead electric transmission or distribution system of this kind approaches and leaves the tower in directions that differ from one another, it is the general practice to secure the conductor to an insulator or insulator string suspended from the tower, or where the conductor is an earth conductor to the tower itself, by means of a fitting generally and hereinafter referred to as a conductor terminating clamp.

Known forms of conductor terminating clamp used for this purpose comprise a body of metal or metal alloy having means for securing the body directly or indirectly to a tower of an overhead electric transmission or distribution system and having, integral with the body, an elongate conductor guide which is of substantially channel-shaped transverse cross-section and which is smoothly curved in the direction of its length and, at or near one end of the conductor guide, a separately formed plate and associated bolt or bolts for mechanically clamping a conductor, when positioned in the guide, between the wall of the conductor guide and the plate.

Where an overhead conductor to be clamped in a conductor terminating clamp has a separate optical fibre and/or optical bundle loosely housed in an elongate compartment within and extending throughout the length of the conductor, as described and claimed in the Complete Specification of our British Patent No. 1598438, we have found that there is a substantial risk that mechanical clamping of the conductor between the wall of the conductor guide and the plate will result in distortion of the conductor and possible damage to the optical fibre and/or optical bundle. This risk is substantially increased where the plate and/or underlying surface of the wall of the conductor guide is transversely corrugated to improve the mechanical grip on the conductor.

It is an object of the present invention to provide an improved conductor terminating clamp which is especially, but not exclusively, suitable for use with overhead flexible electric conductors of the kind forming the subject of our aforesaid patent.

3

According to the invention the improved conductor terminating clamp comprises a body of metal or metal alloy having means for securing the body directly or indirectly to a tower of an overhead electric transmission or distribution system and having, integral with the body, an elongate conductor guide which is of substantially channel-shaped transverse cross-section and which is smoothly curved in the direction of its length and, at or near one end of the conductor guide, means for clamping a conductor in the guide, wherein said conductor clamping means comprises, in combination, a surface of the wall of the conductor guide which tapers smoothly and continuously over a part of the length of the guide in a direction away from the said end of the guide, and at least one elongate wedge member which has a surface of complementary shape to the tapered surface of the guide, the arrangement being such that, when a conductor is positioned in the guide and a tensile force is applied to that part of the conductor extending from the other end of the guide, the elongate wedge member will be urged lengthwise to maintain it in engagement with the tapered surface of the guide with the conductor clamped between the wedge member and a wall of the guide.

The improved conductor terminating clamp has the important advantage that the dimensions of the elongate conductor guide and the wedge member can be so arranged that, when the wedge member is in engagement with the tapered surface of the guide, the wedge member grips the
conductor just sufficiently to develop the necessary
tension without causing any significant radial
distortion of the conductor and, when the conductor has
an elongate compartment in which at least one optical
fibre is loosely housed, without imposing sufficient
radial pressure on the conductor to impair the optical
transmission characteristics of the or each optical
fibre.

In order to arrange for the wedge member to impart
a controlled and predetermined radial pressure on the
conductor, preferably the wedge member is explosively
driven into engagement with the tapered surface of the
guide. Preferably, to limit positively the extent to
which the wedge member can be driven into engagement
with the tapered surface of the guide and thereby
substantially eliminate any risk of imposing
unacceptable radial pressure on the conductor, the
wedge member has at least one outwardly extending
protuberance which is adapted to about the end face of
the conductor guide at the said end of the guide.

Preferably, the smoothly curved conductor guide is
of substantially C-shaped transverse cross-section and,
over a part of its length adjacent the end of the guide
nearer the conductor clamping means, substantially
diametrically opposed side walls of the guide diverge

smoothly and continuously from the central longitudinal axis of the guide in a direction towards said end, the arrangement being such that when the elongate wedge member is introduced between said side walls of the guide it will clamp a conductor positioned in the guide against the base wall of the guide. The wall of the elongate wedge member that will be contiguous with the conductor preferably has a transverse cross-section of smoothly curved concave form.

The angle sub-tended by the smoothly curved elongate conductor guide may be any angle lying between 120° and 360° and, in some circumstances, may be greater than 360°. Where the angle sub-tended by the smoothly curved conductor guide is approximately 180°, the conductor guide is approximately kidney-shaped. Where the angle sub-tended by the smoothly curved conductor guide is greater than 360°, the conductor guide is of substantially spiral form.

Preferably, the body of the improved conductor terminating clamp is made of aluminium or an aluminium-based alloy.

The invention also includes an overhead electric transmission and distribution system of the kind in which at least one overhead flexible electric conductor is suspended at spaced positions along its length from towers, wherein, at at least one of the towers, the conductor is secured to an insulator or insulator string suspended from the tower, or where the conductor is an earth conductor to the tower itself, by a conductor terminating clamp comprising a body of metal or metal alloy having means by which the body is secured directly or indirectly to the tower and having, integral with the body, an elongate conductor guide which is of substantially channel-shaped transverse-section, which is smoothly curved in the direction of its length and which, at or near one end of the conductor guide, has a wall whose surface tapers smoothly and continuously over a part of the length of the guide in a direction away from the said end of the guide, the conductor extending along the guide and being clamped therein by at least one elongate wedge member which has a surface of complementary shape to the tapered surface of the guide and which, when a tensile force is applied to that part of the conductor extending from the other end of the guide, is urged lengthwise to maintain it in engagement with the tapered surface of the guide with the conductor clamped between the wedge member and a wall of the guide.

The invention is further illustrated by a description, by way of example, of three preferred forms of conductor terminating clamp with reference to the accompanying drawings, in which:-

Figure 1 is a side view of a conductor terminating clamp in which the smoothly curved conductor guide is of substantially spiral form;

Figure 2 is a fragmental side view of an end part of the conductor terminating clamp shown in Figure 1;

Figure 3 is a tranverse cross-sectional view of the conductor terminating clamp taking on the line III-III in Figure 2;

Figure 4 is a side view of a conductor terminating clamp in which the angle subtended by the smoothly curved conductor guide is approximately 120° and,

Figure 5 is a side view of a conductor terminating clamp in which the smoothly curved conductor guide is approximately kidney shaped.

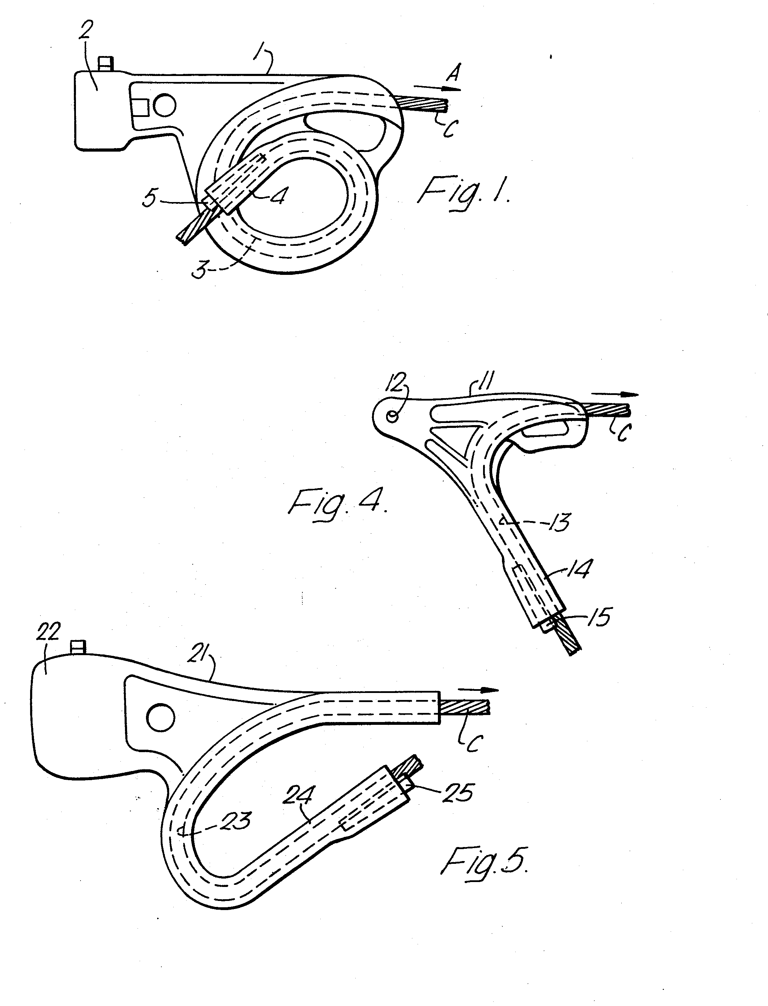

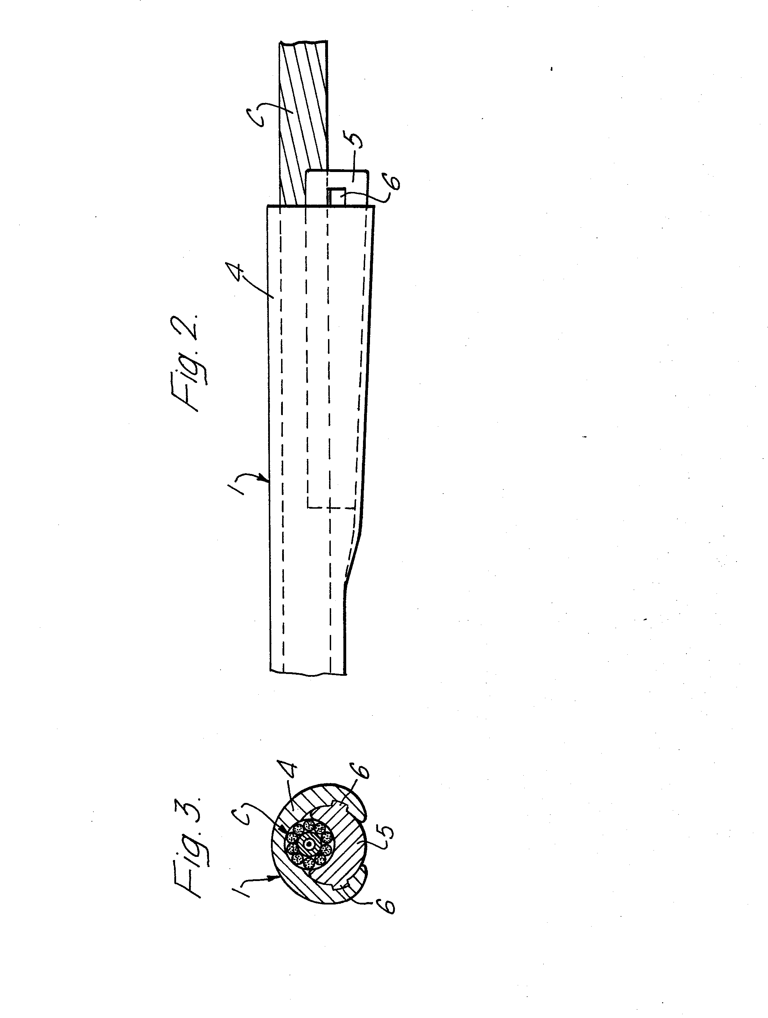

The conductor terminating clamp shown in Figures 1 to 3 comprises a body 1 of aluminium having socket 2 by means of which the body can be indirectly secured to a tower of an overhead electric transmission and distribution system via an insulator string and having, integral with the body, an elongate conductor guide 3 which is of substantially C-shaped transverse cross-section and which is so smoothly curved that the conductor guide subtends an angle of approximately 400° and is of substantially spiral form. At an end part 4 of the conductor guide 3 diametrically opposed side walls of the C-shaped guide diverge smoothly and continuously from the central longitudinal axis of the guide in a direction towards that end and an elongate wedge member 5 is explosively driven into engagement with the surfaces of the tapered side walls under a controlled and predetermined pressure to clamp a conductor C, positioned in the guide and having an elongate compartment in which an optical fibre is loosely housed, against the base wall of the guide. Opposed outwardly extending protuberances 6 on opposite side faces of the wedge member 5 abut the end face of the conductor guide 3 to limit positively the extent to which the wedge member can be explosively driven into the guide and thereby substantially eliminate any risk that the wedge member will impart unacceptable radial pressure on the conductor C to impair the optical transmission characteristics of the optical fibre.

9

0117636

When a tensile force is applied in the direction of the arrow A to that part of the conductor C protruding from the end of the conductor guide remote from the wedge member 5, the wedge member is urged lengthwise to maintain it in engagement with the surfaces of the tapered side walls with the conductor clamped between the wedge member and the base wall of the guide.

The conductor terminating clamps shown in Figures 4 and 5 operate on the same principle as the conductor terminating clamp shown in Figures 1 to 3 except that the conductor guide of the terminating clamp shown in Figure 4 subtends an angle of approximately 120° and the conductor guide of the terminating clamp shown in Figure 5 subtends an angle of approximately 220°.

The conductor terminating clamp shown in Figure 4 comprises an aluminium body 11 having an aperture 12 by means of which the body can be directly or indirectly secured to a tower and an elongate conductor guide 13 of C-shaped transverse cross-section which is smoothly curved and subtends an angle of approximately 120°. At an end part 14 of the conductor guide 13, diametrically opposed side walls of the C-shaped guide diverge smoothly and continuously from the axis of the guide and an elongate wedge member 15, explosively driven into engagement with the surfaces of the tapered side walls under a controlled and predetermined pressure, clamps a conductor C, positioned in the guide, against the base wall of the guide.

The conductor terminating clamp shown in Figure 5 is of substantially kidney-shape and comprises an aluminium body 21 having a socket 22 by means of which the body can be indirectly secured to the tower via an insulator string. A smoothly curved elongate conductor guide 23 of C-shaped transverse cross-section subtends an angle of approximately 220° and, at an end part 24 of the conductor guide, diametrically opposed side walls of the C-shaped guide diverge smoothly and continuously from the axis of the guide. An elongate wedge member 25 is explosively driven into engagement with the surfaces of the tapered side walls under a controlled and predetermined pressure and clamps a conductor C, positioned in the guide, against the base wall of the guide.

CLAIMS

1.      A conductor terminating clamp comprising a body (1,11,21) of metal or metal alloy having means (2,12,22) for securing the body directly or indirectly to a tower of an overhead electric transmission or distribution system and having, integral with the body, an elongate conductor guide (3,13,23) which is of substantially channel-shaped transverse cross-section and which is smoothly curved in the direction of its length and, at or near one end (4,14,24) of the conductor guide, means for clamping a conductor in the guide, characterised in that said conductor clamping means comprises, in combination, a surface of the wall of the conductor guide which tapers smoothly and continuously over a part of the length of the guide in a direction away from the said end of the guide, and at least one elongate wedge member (5,15,25) which has a surface of complementary shape to the tapered surface of the guide, the arrangement being such that, when a conductor (C) is positioned in the guide and a tensile force is applied to that part of the conductor extending from the other end of the guide, the elongate wedge member will be urged lengthwise to maintain it in engagement with the tapered surface of the guide with the conductor clamped between the wedge member and a wall of the guide.

2.      A conductor terminating clamp as claimed in Claim 1, characterised in that the smoothly curved conductor guide (3,13,23) is of substantially C-shaped transverse cross-section and, over a part of its length adjacent the end (4,14,24) of the guide nearer the conductor clamping means, substantially diametrically opposed side walls of the guide diverge smoothly and continuously from the central longitudinal axis of the guide in a direction towards said end, the arrangement being such that when the elongate wedge member (5,15,25) is introduced between said side walls of the guide it will clamp a conductor (C) positioned in the guide against the base wall of the guide.

3.      A conductor terminating clamp as claimed in Claim 1 or 2, characterised in that the wall of the elongate wedge member (5,15,25) that will be contiguous with the conductor has a transverse cross-section of smoothly-curved concave form.

4.      A conductor terminating clamp as claimed in any one of the preceding Claims, characterised in that the wedge member has at least one outwardly extending protuberance (6) which is adapted to abut the end face of the conductor guide (3) at the said end of the guide.

5.      A conductor terminating clamp as claimed in any one of the preceding Claims, characterised in that the angle subtended by the smoothly curved elongate conductor guide lies between 120° and 360°.

6.      A conductor terminating clamp as claimed in any one of the Claims 1 to 4, characterised in that the angle subtended by the smoothly curved conductor guide is greater than 360°.

0117636

7.      A conductor terminating clamp as claimed in any one of the preceding Claims, characterised in that the body (1,11,21) of the clamp is made of aluminium or an aluminium based alloy.

8.      An overhead electric transmission or distribution system of the kind in which at least one overhead flexible electric conductor (C) is suspended at spaced positions along its length from towers, characterised in that, at at least one of the towers, the conductor is secured to an insulator or insulator string suspended from the tower, or where the conductor is an earth conductor to the tower itself, by a conductor terminating clamp comprising a body (1,11,21) of metal or metal alloy having means (2,12,22) by which the body is secured directly or indirectly to the tower and having, integral with the body, an elongate conductor guide (3,13,23) which is of substantially channel-shaped transverse cross-section, which is smoothly curved in the direction of its length and which, at or near one end (4,14,24) of the conductor guide, has a wall whose surface tapers smoothly and continuously over a length of the guide in a direction away from the said end of the guide, the conductor extending along the guide and being clamped therein by at least one elongate wedge member (5,15,25) which has a surface of complementary shape to the tapered surface of the guide and which, when a tensile force is applied to that part of the conductor extending from the other end of the guide, is urged lengthwise to maintain it in engagement with the tapered surface of the guide with the conductor clamped between the wedge member and the wall of the guide.

Fig. 1.

Fig. 4.

Fig. 5.

Fig. 2.

Fig. 3.